# EUROPEAN PATENT APPLICATION

(11) **EP 2 277 845 A1**
(43) Date of publication of application: **26.01.2011**
(21) Application number: 09176507.3
(22) Date of filing: 19.11.2009
(51) Int. Cl.: C07C 17/156

(54) **Stabilizing aqueous solution of iodine chloride by adding sodium chloride**

(30) Priority: 21.07.2009 US 227081 P
(71) Applicant: GE Healthcare AS, 0401 Oslo (NO)
(72) Inventor: Ingvoldstad, Odd Einar, N-4521, Spangereid (NO)
(74) Representative: Wulff, Marianne Weiby

(57) **Abstract**

This invention relates generally to non-ionic X-ray contrast agents. It further relates to the preparation of iodine chloride, a key reagent in the synthesis of non-ionic X-ray contrast agents such as iodixanol and iohexol. In particular, the iodine chloride is produced in a reaction involving iodine, sodium chlorate, and hydrochloric acid as the starting materials. The instant invention relates to a method of stabilizing aqueous iodine chloride solutions by adding about one to about four molar equivalents of sodium chloride relative to sodium chlorate to an aqueous reaction mixture of sodium chlorate, hydrochloric acid, and iodine.

## Description

### TECHNICAL FIELD

This invention relates generally to non-ionic X-ray contrast agents. It further relates to the preparation of iodine chloride, a key reagent in the synthesis of non-ionic X-ray contrast agents, such as iodixanol and iohexol. In particular, it relates to stabilizing an aqueous solution of iodine chloride by adding sodium chloride to a reaction mixture.

### BACKGROUND OF THE INVENTION

Non-ionic X-ray contrast agents constitute a very important class of pharmaceutical compounds produced in large quantities. 5-[N-(2,3-dihydroxypropyl)-acetamido]-N,N'-bis(2,3-dihydroxypropyl)-2,4,6-triiodo-isophthalamide ("iohexol"), 5-[N-(2-hydroxy-3-methoxypropyl)acetamido]-N,N'-bis(2,3-dihydroxypropyl)-2,4,6-triiodo-isophthalamide ("iopentol"), N,N'-Bis(2,3-dihydroxypropyl)-5-[(2-hydroxyacetyl)-(2-hydroxyethyl)amino]-2,4,6-triiodo-benzene-1,3-dicarboxamide ("ioversol"), and 1,3-bis(acetamido)-N,N'-bis[3,5-bis(2,3-dihydroxypropyl-aminocarbonyl)-2,4,6-triiodophenyl]-2-hydroxypropane ("iodixanol") are important examples of such compounds. They generally contain one or two triiodinated benzene rings.

For example, iodixanol, marketed under the trade name Visipaque®, is one of the most used agents in diagnostic X-ray procedures. It is produced in large quantities by GE Healthcare in Lindesnes, Norway. The industrial production of iodixanol involves a multistep chemical synthesis as shown in Scheme 1 below. *See* also U.S. Patent Nos. 6,274,762 and 6,974,882.

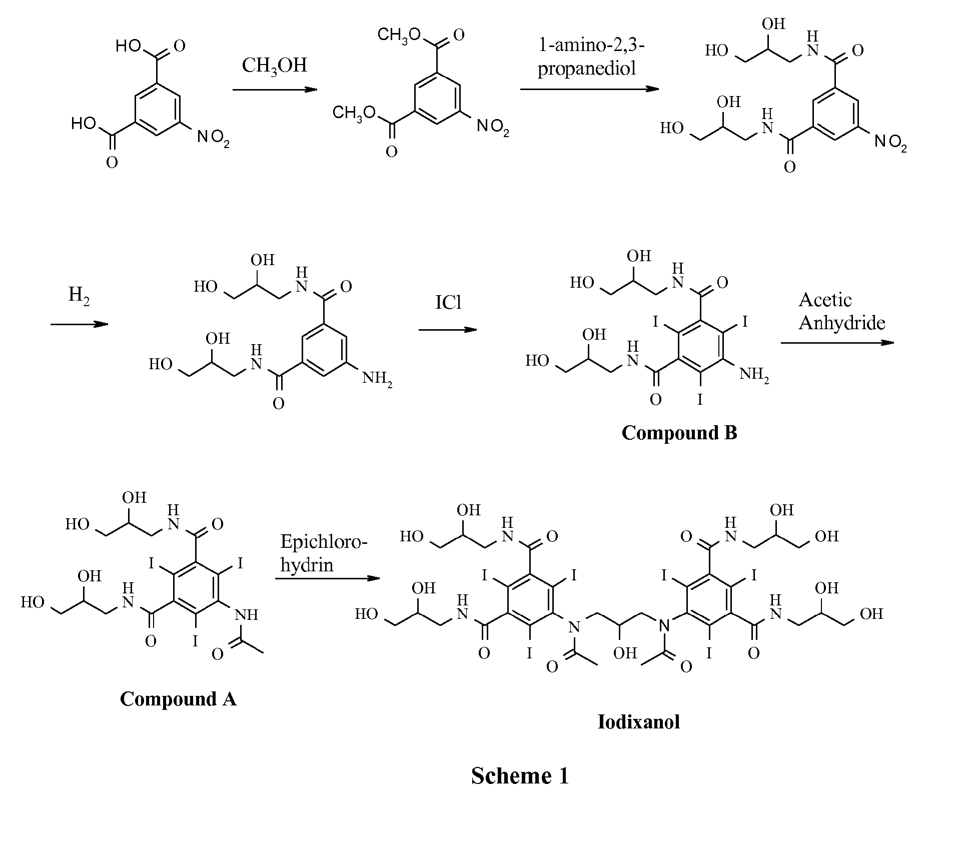

In the synthesis of non-ionic X-ray contrast agents, such as iohexol and iodixanol, an aqueous solution of iodine chloride is used as the iodinating agent. Iodine chloride (ICl) can be produced by several methods, one of which involves the following reaction between iodine and sodium chlorate:

3I₂ + NaClO₃ + 6HCl → 6ICl + NaCl + 3H₂O

However, iodine chloride in aqueous solution may degrade over time, causing the concentration of iodine chloride to decrease and hence decreasing the efficiency of its use with respect to iodination capability in the synthesis of non-ionic X-ray contrast agents. The stability of iodine chloride in water is also pH dependent where degradation increases rapidly at pH 4 or above. The instant invention is directed to a novel method to stabilize iodine chloride in aqueous solution.

### SUMMARY OF THE INVENTION

The present invention provides a process for stabilizing an aqueous solution of iodine chloride by adding between about one and about four molar equivalents of sodium chloride relative to sodium chlorate to an aqueous reaction mixture containing sodium chlorate, hydrochloric acid, and iodine.
Temperature may be about 20-60 °C, preferably 30-50 °C. The pH is lower than 4, preferably lower than 1. Addition of the specified amounts of sodium chloride gives an iodine chloride which is stable for weeks and even months at temperatures up to at least about 50 °C, with ICl concentration deteriorating less than 1 w/w % over this long period.

### DETAILED DESCRIPTION OF THE INVENTION

A typical concentration of aqueous solutions of iodine chloride used for iodination of substituted aromates as part of X-ray contrast agents synthesis is about 40-60 w/w % relative to solution (*i.e.,* 40-60 kilogram ICl per 100 kilogram of ICl solution), more particularly about 45-55 w/w %. In addition, a slight amount of free iodine in the aqueous solution of ICl is desirable in the iodination reaction. To make industrial use of the iodine chloride streamlined and efficient, it is important to have a stable concentration of iodine chloride in the solution, with variations over time of less than, *e.g.*, 1 w/w % (relative to solution).

One equivalent of sodium chloride is formed in the reaction. The resulting iodine chloride solution from this stoichiometry is however not stable with regard to concentration of iodine. We have however surprisingly found that the addition of predetermined amounts of sodium chloride stabilizes the solution significantly. The added amount of sodium chloride is about 1 to about 4 molar equivalents relative to sodium chlorate, preferably about 2.3 to about 3.5 equivalents, most preferably about 2.5 to about 3.2 equivalents. In a preferred embodiment, the additional sodium chloride is added before the addition of sodium chlorate to the reaction.

The instant method allows storing aqueous iodine chloride in storage tanks for a long period of time, even for weeks and months. It also makes the subsequent iodination reaction predictable and helps to utilize the iodine efficiently. With a predictable concentration of iodine chloride from batch to batch, it becomes much easier to design a robust iodination reaction in the synthesis of non-ionic X-ray contrast agent.

The invention is illustrated further by the following examples that are not to be construed as limiting the invention in scope to the specific procedures described in them.

### EXAMPLES

### EXAMPLE 1

Iodine (7.61 kg, 30 mole), hydrochloric acid (37 %, 6.91 kg, 70 mole), water (0.62 kg, 35 mole) and sodium chloride (1.46 kg, 25 mole) was mixed in a reactor at 25°C. A solution of sodium chlorate (1.07 kg, 10 mole) in water (1.20 kg, 67 mole) was prepared under heating and added with caution to the reactor over 2 hours at rigorous stirring. The reaction continued with moderate stirring at 27-30°C for 17 hours. Free iodine was demonstrated by extraction of a sample with chloroform in presence of hydrochloric acid (pink colour obtained). A pH of 1.06 was measured. An aqueous iodine chloride solution (18.80 kg) with a concentration of 51.6 w/w % (relative to reaction solution) was obtained, corresponding to a yield of 99.6 %.

### EXAMPLE 2

Iodine (2700 kg, 10.6 kmole), hydrochloric acid (35 %, 2285 kg, 21.9 kmole), water (250 kg, 13.3 kmole) and sodium chloride (475 kg, 8.1 kmole) is mixed in a reactor at 20°C. An aqueous solution of sodium chlorate (43 w/w %, 864 kg, 2.6 kmole) is added carefully to the reactor over 3-4 hours at rigorous stirring. The reaction continues with moderate stirring at about 50°C for at least 10 hours. Free iodine is demonstrated by extraction of a sample with dichloromethane in presence of hydrochloric acid (pink colour in the organic phase). A pH of less than 0.5 is obtained. An aqueous iodine chloride solution (about 3970 kg) with a concentration of about 50 w/w % (relative to reaction solution) is obtained, corresponding to a yield of nearly 100 % with respect to iodine.

All patents, journal articles, publications and other documents discussed and/or cited above are hereby incorporated by reference.

## Claims

1. A process for stabilizing iodine chloride solutions by adding between about one and about four molar equivalents of sodium chloride relative to sodium chlorate to an aqueous reaction mixture containing sodium chlorate, hydrochloric acid, and iodine.
